# EUROPÄISCHE PATENTSCHRIFT

(11) **EP 2 283 638 B1**
(45) Veröffentlichungstag und Bekanntmachung des Hinweises auf die Patenterteilung: **08.04.2015**
(21) Anmeldenummer: 09731452.0
(22) Anmeldetag: 06.02.2009
(51) Int. Cl.: H04L 12/701

(54) **VERFAHREN ZUM AUSTAUSCH VON DATEN ZWISCHEN EINEM MOBILTELEFON UND EINEM FESTNETZTELEFON**
METHOD FOR EXCHANGING DATA BETWEEN A MOBILE TELEPHONE AND A FIXED LINE TELEPHONE
PROCÉDÉ D'ÉCHANGE DE DONNÉES ENTRE UN TÉLÉPHONE MOBILE ET UN TÉLÉPHONE FIXE

(30) Priorität: 09.04.2008 DE 102008018003
(43) Veröffentlichungstag der Anmeldung: 16.02.2011
(73) Patentinhaber: Unify GmbH & Co. KG, 81379 München (DE)
(72) Erfinder: FISCHER, Kai, 85598 Baldham (DE); FRIES, Steffen, 85598 Baldham (DE); KÖPF, Andreas, 81739 München (DE)
(74) Vertreter: Fritzsche, Thomas
(86) Internationale Anmeldenummer: PCT/EP2009/051379
(87) Internationale Veröffentlichungsnummer: WO 2009/124790

(56) Entgegenhaltungen:
- EP-A- 1 237 333
- EP-A- 1 603 317
- EP-A- 1 781 002
- WO-A-03/081787
- WO-A-2007/112788
- US-A1- 2005 215 233
- US-A1- 2006 183 462
- US-A1- 2007 202 807
- US-A1- 2007 287 498

## Beschreibung

Die Erfindung betrifft ein Verfahren zum Austausch von Daten zwischen einem Mobiltelefon und einem Festnetztelefon gemäß dem Oberbegriff des Anspruchs 1.

Firmen mit Consulting- oder Dienstleistungsauftrag statten zumeist ihre Mitarbeiter mit Mobiltelefonen aus. Außerdem geht, speziell im Consulting Umfeld, der Trend in Richtung mobiler Arbeitsplatz. Trotzdem ist die Festnetzkommunikation beispielsweise in Verbindung mit einem fix installiertem Headset in der Regel einfacher, komfortabler und von besserer Sprachqualität. Aus diesem Grund stehen zumeist auch im oben genannten Umfeld Festsnetztelefone in Büro- und Besprechungs- bzw. Konferenzräumen zur Verfügung. Problematisch ist jedoch in diesem Fall der Abgleich von eigener Telefonnummer und insbesondere auf Mobiltelefonen in Form von Daten abgelegten Informationen, wie beispielsweise Telefonbuch, Adressbuch, Kalender, etc.

Adressverwaltung und Ruflisten auf dem Festnetztelefon abzuspeichern ist nicht optimal, weil einerseits dadurch die Daten doppelt gespeichert werden müssen, es andererseits auch sein kann, dass Telefone, insbesondere Festnetztelefone, von mehreren Personen benutzt werden. Das ist vor allem bei mobilen Arbeitsplätzen und in Konferenzräumen der Fall.

Bisher lässt sich oben genanntes Problem hauptsächlich durch Rufnummernumleitung, doppelte Datenhaltung und manuelles Eintippen von Rufnummern umgehen.

In WO 2007/112788 A1 ist ein Mobiltelefon beschrieben, bei dem durch Ziehen eines Elementes auf dem Display eine automatische Datenübertragung unter Verwendung einer Kurzreichweitenkommunikation ausgelöst wird. In EP 1781002 A2 ist ein automatisches Bluetooth-Verbindungsver-fahren auf Knopfdruck in einem mobilen Kommunikationsendgerät beschrieben. In US 2005/0215233 A1 ist ein Authentisierungsverfahren beschrieben, bei dem eine Authentisierungsaufforderung mit erster und zweiter Kennung von einem drahtlosen Gerät und eine andere Authentisierungsaufforderung mit der zweiten Kennung von einer Feststation bei gegenseitiger Annäherung empfangen wird. Die zweiten Kennungen zur Identifizierung der Feststation müssen übereinstimmen und die erste Kennung zur Identifizierung des drahtlosen Gerätes muss in einer Datenbank mit der zweiten Kennung verknüpft sein. In US 2007/0202807 A1 ist ein Bluetooth-Gerät offenbart mit einer Steuereinheit, die einen RFID-Leser bei Anforderung einer Bluetooth-Verbindung mittels RFID von einem anderen Bluetooth-Gerät in einem Bluetooth-Modus aktiviert und die Verbindungsinformation aus der gelesenen RFID Information ausliest, und einem Bluetooth-Modul, das die Verbindungsinformation empfängt, das andere Bluetooth-Gerät abgleicht, und Bluetooth-Kommunikation durchführt. In EP 1603317 A2 ist ein Verfahren zum Einrichten einer Funktionalität beschrieben, wobei ein erstes Telekommunikationsgerät und ein zweites Telekommunikationsgerät einander angenähert werden, eine direkte Datenübertragung zwischen beiden Telekommunikationsgeräten durchgeführt wird und im Rahmen der Datenübertragung für die Einrichtung der Funktionalität benötigte Informationen übertragen werden.

Als eine Aufgabe der Erfindung kann es daher angesehen werden, ein einfaches Verfahren zum Austausch von Daten, insbesondere Kontakt- und Kommunikationsdaten, wie beispielsweise Telefonbuch, Adressbuch, Kalender, etc., zwischen einem Mobiltelefon und einem Festnetztelefon zu entwickeln.

Zur Vermeidung der Nachteile des Standes der Technik und um weitere Vorteile zu erlangen ist erfindungsgemäß vorgesehen, durch eine Kopplung von Festnetztelefon und Mobiltelefon mittels Nahbereichskommunikation (Near Field Communication; NFC) Technologie, wie beispielsweise Radio Frequency Identification (RFID) oder Bluetooth, Daten, wie beispielsweise Telefonnummern bzw. Telefonbuch, Adressbuch, Kalender, etc., von einem Gerät auf das andere zu übertragen. Hierzu sind sowohl das Festnetztelefon als auch das Mobiletelefon mit NFC Technologie ausgestattet. Zur Synchronisation der Daten müssen sich lediglich beide Geräte in Empfangsreichweite befinden. Die Kopplung erfolgt durch eine Authentisierung von Mobiltelefon und Festnetztelefon. Für die Authentisierung von Mobiltelefon und Festnetztelefon, wobei letzteres vorzugsweise Internet Protokoll basierend (IP-based) ist, und die anschließende Datenübertragung bzw. den anschließenden Datenaustausch werden erfindungsgemäß zwei unterschiedliche Protokolle bzw. NFC Technologien mit unterschiedlichen Sicherheitscharakteristiken verwendet. Die mittels der Nahbereichskommunikation Technologie zwischen Mobiltelefon und Festnetztelefon übertragenen Daten umfassen die Rufnummer des Mobiltelefons, die für die Dauer der Kopplung durch das Festnetztelefon derart übernommen wird, dass bis zur Beendigung der Kopplung an das Mobiltelefon gerichtete Anrufe nur noch auf dem Festnetztelefon entgegengenommen werden können. Lediglich für den Fall, dass eine Übernahme der Rufnummer des Mobiltelefons durch das Festnetztelefon bei dem Festnetztelefon nicht möglich ist, wird eine automatische Rufumleitung vorgesehen. Erfindungswesentlich ist dabei die sichere Kopplung beider Technologien.

Wird RFID als NFC Technologie eingesetzt, erzeugt ein beispielsweise im Festnetztelefon installiertes RFID Lesegerät ein hochfrequentes elektromagnetisches Wechselfeld, welches die Antenne eines beispielsweise im Mobiltelefon angeordneten RFID-Tags erreicht. Im Falle eines induktiv betriebenen RFID Tags entsteht in der Antennenspule, sobald sie in das elektromagnetische Feld kommt, ein Induktionsstrom. Dieser Strom wird gleichgerichtet und damit ein Kondensator als Kurzzeitspeicher aufgeladen, welcher für die Stromversorgung eines in dem RFID Tag integrierten Mikrochips während des Lesevorgangs sorgt. Diese Versorgung übernimmt bei aktiven RFID Tags eine eingebaute Batterie. Bei halb-aktiven Tags übernimmt die Batterie lediglich die Versorgung des Mikrochips. Wichtig ist hervorzuheben, dass es neben induktiv betriebenen RFID Systemen auch noch z.B. kapazitiv betriebene RFID Systeme, Oberflächenwellen RFID Systeme etc. gibt.

Bluetooth als NFC Technologie läuft anders ab. Bluetoothgeräte senden als so genannte Short Range Devices im lizenzfreien ISM-Band. Theoretisch kann eine Datenübertragungsrate von 706,25 kBit/s beim Download bei gleichzeitigen 57,6 kBit beim Upload erreicht werden. Man spricht hierbei von einer asymmetrischen Datenübertragung.

Für die Authentisierung der Geräte wird vorzugsweise RFID verwendet und für die Übertragung der Daten wird vorzugsweise Bluetooth verwendet. Eine Authentisierung via RFID ist vorteilhaft, da es bereits Protokolle und Spezifikationen von asymmetrischer Kryptographie für RFID gibt. Für Bluetooth ist die Benutzung von Zertifikaten erst für die Version 3 angedacht. Bluetooth für die Datenübertragung erlaubt jedoch höhere Übertragungsraten bzw. -reichweiten.

Sowohl Mobiltelefon als auch Festnetztelefon sind vorzugsweise mit Zertifikaten wie etwa Public Key, Gerätesignatur bzw. Gerätezertifikat und dazugehörigem Private Key ausgestattet. Der Verbindungsaufbau mittels dieser Zertifikate garantiert eine eindeutige Zuordnung bzw. Authentisierung der einzelnen Geräte und erlaubt ein sicheres Aushandeln von Sicherheitsparametern für die geschützte Übertragung bzw. den Austausch der Daten.

Vorzugsweise befindet sich ein halbaktiver RFID Tag im Mobiltelefon. Die Stromversorgung des Mikrochips des RFID Tags erfolgt über den Akku des Mobiltelefons. Das Festnetztelefon beinhaltet eine RFID Lesegerät.

Bei der weiteren Übertragung bzw. beim Austausch der Daten, z.B. Rufnummer, Adressbuch, etc., wird Bluetooth verwendet. Eine Benutzung von Pre-Shared Keys (PSK) ist hierbei nicht weiter notwendig, da die Geräte durch die mittels RFID ausgetauschten Zertifikate und das zugehörig Challenge-Response-Verfahren bereits authentisiert sind und vorzugsweise über diesen Mechanismus einen Session-Key aushandeln.

Für eine Authentisierung existiert vorzugsweise eine gemeinsame Certification Authority (CA), bzw. die als Public Keys bezeichneten öffentlichen kryptographischen Schlüssel des jeweils eigenen Geräts sind vorzugsweise bekannt.

Im Falle von gerätebasierenden Zertifikaten sind die öffentlichen kryptographischen Schlüssel vorzugsweise an ein gerätespezifisches Merkmal gebunden, wie z.B. an die Telefonnummer. So ist es auch möglich dass sich mehrere Mobiltelefone gegenüber einem Festnetztelefon gleichzeitig authentisieren und aus dieser Liste ein Mobiltelefon manuell ausgewählt werden kann, wie es z.B. in Besprechungsräume häufig der Fall sein kann. In einer Firmenumgebung ist dies relativ einfach zu verwirklichen.

Im Falle von reinen Public Keys müssen diese vor der ersten Verbindung der Endgeräte ausgetauscht werden. Hier kann auch auf einen im Endgerät befindlichen Key-Store zugegriffen werden, unabhängig davon, ob es sich nunmehr um ein Mobiltelefon oder um ein Festnetztelefon handelt.

Im Anwendungsfall besitzt sowohl das Mobiltelefon, als auch das Festnetztelefon eine eigene Rufnummer. Sobald sich das Mobiltelefon in Lesereichweite des Festnetztelefons befindet, ist es möglich wie oben beschrieben, eine Verbindung aufzubauen. Nach erfolgreicher Verbindung wird je nach Konfiguration die Rufnummer des Mobiltelefons durch das Festnetztelefon übernommen und auch das Adressbuch bzw. evtl. auch andere Daten übertragen bzw. ausgetauscht.

Sofern eine Übernahme der Mobilfunknummer durch das Fenstnetztelefon aus technischen Gründen bei einem Festnetztelefon nicht möglich ist, kann auch eine automatische Rufumleitung vorgesehen werden.

Dabei ist es möglich die Daten tatsächlich zu duplizieren oder aber mit dem entsprechenden Bluetooth-Profil (PBAP - Phone Book Access Profile) auf das Telefonbuch des Mobiltelefons zuzugreifen. Im Idealfall kann dies auch wahlweise gestaltet werden.

Hierauf werden bis zur Beendigung der Verbindung alle Anrufe nur noch auf dem Festnetztelefon entgegengenommen. Via Festnetztelefon lassen sich aber auch auf andere Daten des Mobiltelefons zugreifen, beispielsweise auf Anruferlisten, etc.

Vorzugsweise werden diese Daten nach Beenden der Verbindung wieder aus dem Speicher des Festnetztelefons entfernt. Dies ist insofern vorteilhaft bzw. sogar notwendig, als dass bei einem mobilen Arbeitsplatz oder in einem Konferenzraum das Festnetztelefon auch noch von anderen Personen benutzt werden kann und die Daten aus dem Mobiltelefon nicht für andere Personen lesbar sein sollten. Dies kann z.B. über eine so genannte Security Policy vorgeschrieben sein.

Ein Beenden der Verbindung kann über eine Taste am Festnetztelefon und/oder Mobiltelefon erfolgen.

Alternativ ist es auch möglich, die Verbindung der Geräte zu trennen, sobald sich die Geräte für mehr als eine vorgebbare Zeit, z.B. für mehr als 1 Minute außerhalb der Empfangsreichweite befinden. Maßgeblich für die Empfangsreichweite ist hierbei die Bluetooth-Empfangsreichweite und nicht die RFID-Empfangsreichweite, da RFID nur für die Authentisierung benutzt wird.

Für die einfachere Handhabung in der Praxis können sowohl im Mobiltelefon als auch in der dazugehörigen Backend Infrastruktur die Verbindungsdaten gespeichert werden. Somit ist es möglich, nach einer erfolgreichen Verbindung zwischen Mobiltelefon und Festnetztelefon für eine erneute Verbindung Daten aus einer vorangegangenen Verbindung zu verwenden.

So können beispielsweise nach einem ersten Verbindungsaufbau vorzugsweise die Media Access Control (MAC) Adressen der Geräte und die dazugehörige Link Keys gespeichert und für alle weiteren Verbindungen wiederverwendet werden. Dies erleichtert die Anmeldung an häufig benutzten Festnetztelefonen.

Diese Vorgehensweise ist jedoch vorzugsweise von der jeweiligen Security-Policy abhängig, die durch die entsprechenden Endgeräte, vorzugsweise Festnetztelefone, durchgesetzt werden kann. Diese Vorgehensweise sollte vorzugsweise nicht in hochkritischen Umgebungen möglich sein. Ein "rekeying" mittels Mobiltelefon durch einen Benutzer ist vorzugsweise immer möglich.

In der Praxis ist es sinnvoll, die Empfangsreichweite des RFID Systems auf wenige Zentimeter bis höchsten einen Meter zu beschränken, um eine ungewollte Anmeldung an einem System zu vermeiden und um potentielle Man-in-the-middle Angriffe zu erschweren. Man-in-the-middle Angriffe sind zwar bei einer als Mutual Authentication bezeichneten gegenseitigen Authentisierung, bei der sich zuerst das Lesegerät authentisiert und sich danach der Tag authentisiert, ohnehin nur sehr schwer durchzuführen, aber nichts desto trotz nicht unmöglich.

Eine Bestätigung der Kopplung von Mobiltelefon und Festnetztelefon kann durch Drücken eines auch als Accept-Button bezeichneten Knopfes am Festnetztelefon erfolgen.

In Fällen, bei denen sich mehrere Mobiltelefone an einem Festnetztelefon zur Kopplung angemeldet haben, können diese am Festnetztelefon aufgelistet werden, wobei aus der Auflistung ein bestimmtes Mobiltelefon bzw. ein Teilnehmer durch Drücken eines auch als Accept-Button bezeichneten Knopfes am Festnetztelefon ausgewählt wird. Damit hat auch nur dieser Teilnehmer Zugriff auf das Festnetztelefon.

Wichtig ist hervorzuheben, dass ein für die Authentifizierung erforderlicher Schlüssel auch manuell eingegeben werden kann.

Die Erfindung wird nachfolgend anhand von Ausführungsbeispielen näher erläutert.

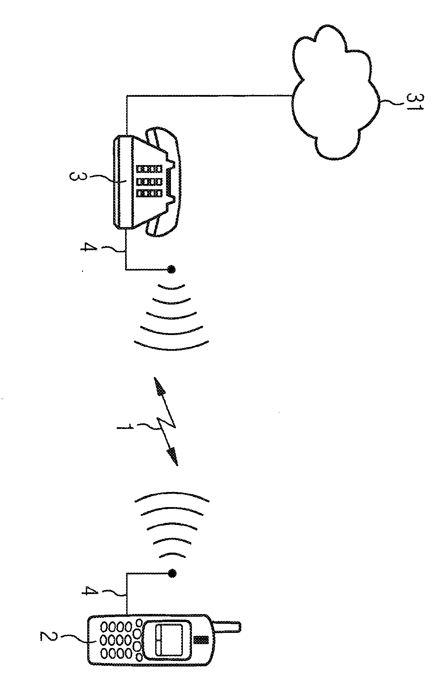

Es zeigt
- Fig. 1: eine schematische Darstellung einer teilweise verschlüsselten Medieninformation.

In Fig. 1 ist gezeigt, wie der Austausch von Daten 1 zwischen einem Mobiltelefon 2 und mit einem mit dem Festnetz 31 verbundenen Festnetztelefon 3 erfolgt, nämlich dass zunächst ein mit Nahbereichskommunikation (Near Field Communication; NFC) Technologie 4 ausgestattete Mobiltelefon 2 und ein ebenfalls mit NFC Technologie 4 ausgestattete Festnetztelefon 3 in Empfangsreichweite gebracht werden, anschließend eine Kopplung von Mobiltelefon 2 und Festnetztelefon 3 mittels der NFC Technologie erfolgt, und dann Daten 1 mittels der NFC Technologie zwischen Mobiltelefon 2 und Festnetztelefon 3 übertragen werden, wobei die Kopplung durch eine Authentisierung von Mobiltelefon 2 und Festnetztelefon 3 erfolgt und für die Authentisierung und die anschließende Übertragung der Daten 1 zwei unterschiedliche NFC Technologien verwendet werden.

Durch Kopplung von Festnetztelefon und Mobiltelefon mittels Nahbereichskommunikation (Near Field Communication; NFC) Technologie, wie beispielsweise (RFID) oder Bluetooth, lassen sich Daten, wie beispielsweise Telefonnummern bzw. Telefonbuch, Adressbuch, Kalender, etc., von einem Gerät auf das andere übertragen. Im konkreten Fall bedeutet dies, dass sowohl Festnetztelefon als auch Mobiletelefon mit NFC Technologie ausgestattet sein müssen. Zur Synchronisation der Daten müssen sich lediglich beide Geräte in Empfangsreichweite befinden.

Bei einem ersten Ausführungsbeispiel führen Mobiltelefon und Festnetztelefon via RFID eine gegenseitige Authentisierung durch und können danach über einen verschlüsselten Kanal weitere Daten übertragen. Über diesen Kanal wird ein Session Key übertragen, welcher für die anschließende Bluetooth-Verbindung verwendet wird.

Als kryptographisches Protokoll können hierbei ein authentifizierter Diffie-Hellman-Schlüsselaustausch oder auch eine RSA Schlüsselverschlüsselung herangezogen werden. Eine zusätzliche Bestätigung des Verbindungsaufbaus mittels Persönlicher Identifikations Nummer (PIN) ist dabei nicht notwendig. Eine Bestätigung durch das Drücken eines Knopfes am Festnetztelefon ist jedoch sinnvoll. Auch wenn es durch die relativ geringe Lesereichweite bei der Initialisierung der Verbindung selten zu ungewollten Anmeldeversuchen kommen sollte, kann es bei der Verwendung von Funktechnologie immer wieder zu Reflexionen und ungewollten Reichweiteerhöhungen kommen. Aus diesem Grund ist ein simpler Accept-Button am Festnetztelefon, speziell in Großraumbüros sinnvoll. In Szenarien, bei denen sich mehrere Mobiltelefone an einem Festnetztelefon angemeldet haben, kann mit dem Accept-Button auch ein bestimmter Teilnehmer, der z.B. anhand der Mobilfunknummer identifiziert wird, ausgewählt werden. Damit hat auch nur dieser Teilnehmer Zugriff auf das Festnetztelefon.

Bei einem zweiten Ausführungsbeispiel führen Mobiltelefon und Festnetztelefon z.B. via Benutzung eines Elliptische-Kurven-Kryptosystem eine gegenseitige Authentisierung durch. Anschließend werden keine weiteren Schlüssel übertragen. Anhand der ID, die während der Authentisierungsphase ausgetauscht wird, kann das Festnetztelefon Konfigurationsdaten von der Infrastruktur abfragen. Darüber hinaus kann das Festnetztelefon einen Session Key erzeugen, der auf dem Display angezeigt wird und auf dem Mobiltelefon eingegeben werden muss. Dieser Link Key aus der Pairing Phase wird wiederum für die nachfolgende Bluetooth-Verbindung verwendet. Der Link Key kann im Profil des Benutzers gespeichert werden, damit diese Phase beim nächsten Verbindungsaufbau übersprungen werden kann. Ob dies erlaubt ist, regelt die Security Policy. Im Mobiltelefon wird dieser Schlüssel ebenfalls gespeichert, zusammen mit der MAC Adresse des Festnetztelefons. Der Benutzer kann, unabhängig von der Security Policy jedoch bei einer erneuten Anmeldung auch eine Aktualisierung des Link Keys erzwingen.

## Patentansprüche

1. Verfahren zum Austausch von Daten (1) zwischen einem Mobiltelefon (2) und einem Festnetztelefon (3), bei dem zunächst ein mit Nahbereichskommunikation Technologie (4) ausgestattetes Mobiltelefon (2) und ein ebenfalls mit Nahbereichskommunikation Technologie (4) ausgestattetes Festnetztelefon (3) in Empfangsreichweite gebracht werden, anschließend eine Kopplung von Mobiltelefon (2) und Festnetztelefon (3) mittels der Nahbereichskommunikation Technologie (4) erfolgt,
**dadurch gekennzeichnet, dass**
dann Daten (1) mittels der Nahbereichskommunikation Technologie (4) zwischen Mobiltelefon (2) und Festnetztelefon (3) übertragen werden, wobei die Kopplung durch eine Authentisierung von Mobiltelefon (2) und Festnetztelefon (3) erfolgt und für die Authentisierung und die anschließende Übertragung der Daten (1) zwei unterschiedliche Nahbereichskommunikation Technologien (4) verwendet werden, wobei die mittels der Nahbereichskommunikation Technologie (4) zwischen Mobiltelefon (2) und Festnetztelefon (3) übertragenen Daten (1) die Rufnummer des Mobiltelefons (2) umfassen und die Rufnummer des Mobiltelefons (2) für die Dauer der Kopplung durch das Festnetztelefon (3) derart übernommen wird, dass bis zur Beendigung der Kopplung an das Mobiltelefon (2) gerichtete Anrufe nur noch auf dem Festnetztelefon (3) entgegengenommen werden können, und lediglich für den Fall, dass eine Übernahme der Rufnummer des Mobiltelefons (2) durch das Festnetztelefon (3) bei dem Festnetztelefon (3) nicht möglich ist, eine automatische Rufumleitung vorgesehen wird.

2. Verfahren nach Anspruch 1,
**dadurch gekennzeichnet,**
**dass** für die Authentisierung von Mobiltelefon (2) und Festnetztelefon (3) Radio Frequency Identification verwendet wird, und für die Übertragung der Daten (1) Bluetooth verwendet wird.

3. Verfahren nach Anspruch 2,
**dadurch gekennzeichnet,**
**dass** sich im Mobiltelefon (2) ein Radio Frequency Identification Tag befindet und das Festnetztelefon (3) ein Radio Frequency Identification Lesegerät beinhaltet.

4. Verfahren nach Anspruch 2 oder 3,
**dadurch gekennzeichnet,**
**dass** die Radio Frequency Identification Empfangsreichweite auf wenige Zentimeter bis einen Meter beschränkt wird.

5. Verfahren nach einem der vorhergehenden Ansprüche,
**dadurch gekennzeichnet,**
**dass** sowohl Mobiltelefon (2) als auch Festnetztelefon (3) mit Zertifikaten ausgestattet sind, welche eine eindeutige Authentisierung der einzelnen Geräte (2, 3) und ein sicheres Aushandeln von Sicherheitsparametern für die Übertragung der Daten (1) erlauben.

6. Verfahren nach Anspruch 5,
**dadurch gekennzeichnet,**
**dass** die Zertifikate jeweils bekannte öffentliche kryptographische Schlüssel des eigenen Geräts (2, 3) umfassen.

7. Verfahren nach Anspruch 5 oder 6,
**dadurch gekennzeichnet,**
**dass** gerätebasierende Zertifikate vorgesehen sind, bei denen die öffentlichen kryptographischen Schlüssel an ein gerätespezifisches Merkmal gebunden sind.

8. Verfahren nach Anspruch 6 oder 7,
**dadurch gekennzeichnet,**
**dass** die öffentlichen kryptographischen Schlüssel von Mobiltelefon (2) und Festnetztelefon (3) vor einer ersten Kopplung von Mobiltelefon (2) und Festnetztelefon (3) ausgetauscht werden.

9. Verfahren nach einem der vorhergehenden Ansprüche,
**dadurch gekennzeichnet,**
**dass** nach einer erfolgreichen Kopplung zwischen Mobiltelefon (2) und Festnetztelefon (3) für eine erneute Kopplung Daten (1) aus einer vorangegangenen Kopplung verwendet werden.

10. Verfahren nach einem der Ansprüche 2 bis 9,
**dadurch gekennzeichnet,**
**dass** die Daten (1) dupliziert werden oder mit einem Bluetooth-Profil auf ein Telefonbuch des Mobiltelefons (2) zugegriffen wird.

11. Verfahren nach einem der vorhergehenden Ansprüche,
**dadurch gekennzeichnet,**
**dass** ein Beenden der Kopplung über eine Taste am Festnetztelefon (3) und/oder Mobiltelefon (2) erfolgt.

12. Verfahren nach einem der vorhergehenden Ansprüche,
**dadurch gekennzeichnet,**
**dass** ein Beenden der Kopplung erfolgt, sobald sich die Geräte (2, 3) für mehr als eine vorgebbare Zeit außerhalb der Empfangsreichweite der für die Übertragung der Daten (1) verwendeten Nahbereichskommunikation Technologie (4) befinden.

13. Verfahren nach einem der vorhergehenden Ansprüche,
**dadurch gekennzeichnet,**
**dass** eine Bestätigung der Kopplung von Mobiltelefon (2) und Festnetztelefon (3) durch Drücken eines auch als Accept-Button bezeichneten Knopfes am Festnetztelefon (3) erfolgt.

14. Verfahren nach einem der vorhergehenden Ansprüche,
**dadurch gekennzeichnet,**
**dass** in Fällen, bei denen sich mehrere Mobiltelefone (2) an einem Festnetztelefon (3) zur Kopplung angemeldet haben, diese am Festnetztelefon (3) aufgelistet werden und aus der Auflistung ein bestimmtes Mobiltelefon (2) durch Drücken eines Knopfes am Festnetztelefon (3) ausgewählt wird.

15. Verfahren nach einem der vorhergehenden Ansprüche,
**dadurch gekennzeichnet,**
**dass** ein für die Authentifizierung erforderlicher Schlüssel manuell eingegeben wird.

## Claims

1. Method for exchanging data (1) between a mobile telephone (2) and a fixed line telephone (3), wherein firstly the mobile telephone (2) equipped with Near Field Communication (NFC) technology (4) and a fixed line telephone (3) also equipped with NFC technology (4) are initially placed in a reception range, and the mobile telephone (2) and the fixed line telephone (3) are then coupled by means of the NFC technology (4), **characterised in that** data (1) is then transmitted between the mobile telephone (2) and the fixed line telephone (3) by means of the NFC technology (4), wherein the coupling occurs when the mobile telephone (2) and the fixed line telephone (3) are authenticated, and two different NFC technologies (4) are used for the authentication and subsequent transmission of the data (1), wherein the data (1) transmitted by the NFC technology (4) between the mobile telephone (2) and the fixed line telephone (3) comprise the telephone number of the mobile telephone (2), and the telephone number of the mobile telephone (2) is acquired such that calls to the mobile telephone (2) until the end of the coupling can only be received on the fixed line telephone (3), and only if the acquisition of the telephone number of the mobile telephone (2) by the fixed line telephone (3) is not possible for the fixed line telephone (3), and automatic call diversion is provided.

2. Method according to claim 1, **characterised in that** radio frequency identification is used for the authentication of the mobile telephone (2) and the fixed line telephone (3), and Bluetooth is used for the transmission of data (1).

3. Method according to claim 2, **characterised in that** a radio frequency identification tag is found in the mobile telephone (2), and the fixed line telephone (3) contains a radio frequency identification reading device.

4. Method according to claim 2 or 3, **characterised in that** the radio frequency identification reception range is limited to between a few centimetres and one metre.

5. Method according to any one of the preceding claims, **characterised in that** both the mobile telephone (2) and also the fixed line telephone (3) are equipped with certificates which permit an unambiguous authentication of the individual devices (2, 3) and a secure negotiation of security parameters for the transmission of data (1).

6. Method according to claim 5, **characterised in that** the certificates comprise in each case known public cryptographic keys of the own device (2, 3).

7. Method according to claim 5 or 6, **characterised in that** device-based certificates are provided in which the public cryptographic keys are tied to a device-specific feature.

8. Method according to claim 6 or 7, **characterised in that** the public cryptographic keys of the mobile telephone (2) and fixed line telephone (3) are exchanged before a first coupling of the mobile telephone (2) and the fixed line telephone (3).

9. Method according to any one of the preceding claims, **characterised in that** after a successful coupling between the mobile telephone (2) and the fixed line telephone (3), data (1) from a previous coupling are used for a further coupling.

10. Method according to any one of the claims 2 to 9, **characterised in that** the data (1) are duplicated or reference is made to a telephone book of the mobile telephone (2) with a Bluetooth profile.

11. Method according to any one of the preceding claims, **characterised in that** the coupling is ended by means of a key on the fixed line telephone (3) and / or mobile telephone (2).

12. Method according to any one of the preceding claims, **characterised in that** the coupling is ended once the devices (2, 3) are located outside the reception range of the NFC technology (4) used for the transmission of data (1) for more than a specifiable time.

13. Method according to any one of the preceding claims, **characterised in that** a confirmation of the coupling of the mobile telephone (2) and fixed line telephone (2) occurs by pressing a button on the fixed line telephone (3) also called the accept button.

14. Method according to any one of the preceding claims, **characterised in that** in cases in which multiple mobile telephones (2) have registered to be coupled to a fixed line telephone (3), they are listed on the fixed line telephone (3) and from the list, a particular mobile telephone (2) is selected by pressing a button on the fixed line telephone (3).

15. Method according to any one of the preceding claims, **characterised in that** a key required for the authentication is entered manually.

## Revendications

1. Procédé servant à échanger des données (1) entre un téléphone mobile (2) et un téléphone fixe (3), dans le cadre duquel on amène dans un premier temps dans une portée de réception un téléphone mobile (2) équipé d'une technologie de communication à courte portée (4) ainsi qu'un téléphone fixe (3) équipé de la même manière d'une technologie de communication à courte portée (4), puis on effectue un appariement entre le téléphone mobile (2) et le téléphone fixe (3) au moyen de la technologie de communication à courte portée (4),
**caractérisé en ce**
**qu'**alors on transfère des données (1) au moyen de la technologie de communication à courte portée (4) entre le téléphone mobile (2) et le téléphone fixe (3), sachant que l'appariement est effectué par une authentification du téléphone mobile (2) et du téléphone fixe (3), et en ce qu'on utilise en vue de l'authentification et de la transmission consécutive des données (1), deux technologies différentes de communication à courte portée (4), sachant que les données (1) transmises au moyen de la technologie de communication à courte portée (4) entre le téléphone mobile (2) et le téléphone fixe (3) comprennent le numéro d'appel du téléphone mobile (2) et que le numéro d'appel du téléphone mobile (2) est repris pour la durée de l'appariement par le téléphone fixe (3) de telle manière que des appels se destinant au téléphone mobile (2) ne peuvent être reçus que par le téléphone fixe (3) jusqu'à l'arrêt de l'appariement, et qu'un routage automatique d'appel est prévu uniquement si une reprise du numéro d'appel du téléphone mobile (2) par le téléphone fixe (3) n'est pas possible par le téléphone fixe (3).

2. Procédé selon la revendication 1,
**caractérisé en ce**
**qu'**on utilise en vue de l'authentification du téléphone mobile (2) et du téléphone fixe (3) une RFID (Radio Frequency Identification - identification par radiofréquence), et en ce qu'on utilise le Bluetooth en vue de la transmission des données (1).

3. Procédé selon la revendication 2,
**caractérisé en ce**
**qu'**une étiquette d'identification par radiofréquence (Radio Frequency Identification Tag) se trouve dans le téléphone mobile (2), et en ce que le téléphone fixe (3) détient un lecteur RFID.

4. Procédé selon la revendication 2 ou 3,
**caractérisé en ce**
**que** la portée de réception de la RFID se limite à une distance allant de quelques centimètres à un mètre.

5. Procédé selon l'une quelconque des revendications précédentes,
**caractérisé en ce**
**qu'**aussi bien le téléphone mobile (2) que le téléphone fixe (3) sont équipés de certificats, qui permettent une authentification univoque des divers appareils (2, 3) et un traitement fiable des paramètres de sécurité en vue de la transmission des données (1).

6. Procédé selon la revendication 5,
**caractérisé en ce**
**que** les certificats comprennent respectivement des clés de cryptage publiques connues propres à chaque appareil (2, 3).

7. Procédé selon la revendication 5 ou 6,
**caractérisé en ce**
**que** sont prévus des certificats se basant sur chaque appareil, dans le cadre desquels les clés de cryptage publiques sont liées à une caractéristique spécifique de l'appareil concerné.

8. Procédé selon la revendication 6 ou 7,
**caractérisé en ce**
**que** les clés de cryptage publiques du téléphone mobile (2) et du téléphone fixe (3) sont échangées avant un premier appariement entre le téléphone mobile (2) et le téléphone fixe (3).

9. Procédé selon l'une quelconque des revendications précédentes,
**caractérisé en ce**
**qu'**on utilise, une fois l'appariement entre le téléphone mobile (2) et le téléphone fixe (3) réalisé avec succès, des données (1) provenant d'un appariement précédent pour un nouvel appariement.

10. Procédé selon l'une quelconque des revendications 2 à 9,
**caractérisé en ce**
**que** les données (1) sont dupliquées ou sont utilisées à l'aide d'un profil Bluetooth sur un répertoire du téléphone mobile (2).

11. Procédé selon l'une quelconque des revendications précédentes,
**caractérisé en ce**
**que** l'arrêt de l'appariement est effectué par l'intermédiaire d'une touche au niveau du téléphone fixe (3) et/ou du téléphone mobile (2).

12. Procédé selon l'une quelconque des revendications précédentes,
**caractérisé en ce**
**que** l'arrêt de l'appariement est effectué dès que les appareils (2, 3) se trouvent, pendant une durée supérieure à une durée pouvant être prédéfinie, en dehors de la portée de réception de la technologie de communication à courte portée (4) utilisée en vue de la transmission des données (1).

13. Procédé selon l'une quelconque des revendications précédentes,
**caractérisé en ce**
**qu'**une confirmation de l'appariement du téléphone mobile (2) et du téléphone fixe (3) est effectuée en appuyant sur une touche, désignée par « Accept-Button » sur le téléphone fixe (3).

14. Procédé selon l'une quelconque des revendications précédentes,
**caractérisé en ce**
**que** dans les cas où plusieurs téléphones mobiles (2) sont connectés à un téléphone fixe (3) aux fins de l'appariement, ces derniers sont répertoriés sur le téléphone fixe (3) et un téléphone mobile (2) en particulier est sélectionné de la liste en appuyant sur une touche du téléphone fixe (3).

15. Procédé selon l'une quelconque des revendications précédentes,
**caractérisé en ce**
**qu'**une clé requise pour l'authentification est entrée manuellement.
